(19) Europäisches Patentamt

European Patent Office

Office européen des brevets

(11) Veröffentlichungsnummer: **0 245 886 B1**

(12) **EUROPÄISCHE PATENTSCHRIFT**

(45) Veröffentlichungstag der Patentschrift: **07.07.93**

(21) Anmeldenummer: **87200605.1**

(22) Anmeldetag: **01.04.87**

(51) Int. Cl.⁵: **H04N 5/93**

(54) **Schaltungsanordnung für ein Bildwiedergabegerät.**

(30) Priorität: **11.04.86 DE 3612266**

(43) Veröffentlichungstag der Anmeldung:
**19.11.87 Patentblatt 87/47**

(45) Bekanntmachung des Hinweises auf die
Patenterteilung:
**07.07.93 Patentblatt 93/27**

(84) Benannte Vertragsstaaten:
**AT DE FR GB**

(56) Entgegenhaltungen:
**DE-A- 2 631 335          DE-A- 3 223 846**
**FR-A- 2 237 358          US-A- 4 142 208**
**US-A- 4 363 053          US-A- 4 470 080**

**PATENT ABSTRACTS OF JAPAN, Band 10,**
**Nr. 65 (E-388)[2122], 14. März 1986; & JP-A-60**
**216 681 (SONY K.K.) 30-10-1985**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB AT**

(72) Erfinder: **Gehrt, Holger
Rothe Strasse 33
W-2000 Hamburg 50(DE)**
Erfinder: **Rehfeldt, Karl-Heinz
Dubenhorst 24
W-2087 Ellerbek(DE)**

(74) Vertreter: **Hartmann, Heinrich, Dipl.-Ing. et al
Philips Patentverwaltung GmbH Wendenstrasse 35 Postfach 10 51 49
W-2000 Hamburg 1 (DE)**

## Beschreibung

Die Erfindung bezieht sich auf eine Schaltungsanordnung für ein Bildwiedergabegerät mit einem Amplitudenbegrenzer, der einen Eingang und einen Ausgang aufweist und der zum Umschalten der Polarität seines Ausgangssignale eingerichtet ist, wenn ein frequenzmoduliertes Bildsignal an seinem Eingang einen Schwellwert passiert, mit einem mit dem Ausgang des Amplitudenbegrenzers gekoppelten Frequenzdemodulator und mit einem Verzögerungsglied, dessen Verzögerungszeit T in der Größenordnung von einem Viertel der Trägerperiode des frequenzmodulierten Bildsignals liegt.

Eine solche Anordnung ist beispielsweise aus FR-A- 2 237 358 bekannt.

Unter einem Bildwiedergabegerät ist eine Vorrichtung zu verstehen, die aufgezeichnete Signale z.B. von einem Magnetband oder von einer optischen Speicherplatte wiedergibt und in Signale umwandelt, die z.B. von einem Fernsehempfänger verarbeitet werden können. Ein solches Bildwiedergabegerät kann z.B. ein Videorecorder oder ein Bildplattenspieler sein. Die eingangs genannte Schaltungsanordnung für einen Videorecorder ist aus der Zeitschrift "Funkschau", 1984, Heft 15, Seiten 42 bis 45, insbesondere Bild 5, bekannt. Diese Schaltungsanordnung verarbeitet ein frequenzmoduliertes Helligkeitssignal (Bildsignal), das vom Magnetband über Videoköpfe, einen Kopfverstärker und zwei hintereinander geschaltete Filter einem Amplitudenbegrenzer zugeführt wird. Der Amplitudenbegrenzer verstärkt und begrenzt das Signal so, daß bei Überschreitung eines konstanten Schwellwertes die Polarität des Ausgangssignals des Amplitudenbegrenzers wechselt. Die Ausgangssignale des Amplitudenbegrenzers werden einem Frequenzdemodulator zugeführt, der ein demoduliertes Bildsignal liefert.

Bei einem solchen frequenzmodulierten Helligkeitssignal entspricht der obere Grenzwert des Frequenzhubes der trägermodulierten Schwingung einem weißen Bildinhalt und der untere Grenzwert einem schwarzen Bildinhalt. Ändert sich der Bildinhalt des aufgezeichneten frequenzmodulierten Helligkeitssignals plötzlich von einem schwarzen zu einem weißen Bildinhalt, d.h. die Frequenz des frequenzmodulierten Helligkeitssignals springt von einer niedrigen auf eine hohe Frequenz, wird bei der Wiedergabe durch den Band-Videokopf-Übertragungsweg und die Filter die Amplitude viel kleiner. Bei ungünstiger Phasenlage des Signals kann es dazu kommen, daß ein oder mehrere Schwingungen des frequenzmodulierten Signals nicht von dem Begrenzerschwellwert geschnitten werden. Dem Frequenzdemodulator wird daher kein hochfrequenter Signalanteil nach der Begrenzung geliefert. Er erzeugt somit ein niederfrequentes Signal, d.h. ein Fernsehempfänger würde einen schwarzen Bildinhalt wiedergeben. Es ist folglich eine Signalinversion aufgetreten.

Der Erfindung liegt die Aufgabe zugrunde, eine Schaltungsanordnung der eingangs genannen Art so auszubilden, daß keine Signalinversion bei einem Frequenzsprung auftritt.

Die Aufgabe wird erfindungsgemäß dadurch gelöst, daß der Ausgang des Amplitudenbegrenzers über das Verzögerungsglied mit dem Eingang eines Tiefpasses gekoppelt ist, dessen Ausgang mit einem zweiten Eingang des Amplitudenbegrenzers gekoppelt ist und der den Schwellwert des Amplitudenbegrenzers liefert.

In der erfindungsgemäßen Schaltungsanordnung wird am Ausgang des Amplitudenbegrenzers, der das frequenzmodulierte Bildsignal verstärkt und begrenzt, ein rechteckförmiges Signal abgegeben. Das Ausgangssignal des Amplitudenbegrenzers wird in dem Verzögerungsglied verzögert und einem Tiefpaß zugeführt, der schnell den zeitlichen Schwankungen des zeitlichen Mittelwertes des Ausgangssignals des Verzögerungsgliedes folgt. Dadurch wird eine Verschiebung des Schwellwertes des Amplitudenbegrenzers erreicht. Das Ausgangssignal des Tiefpasses bildet den neuen Schwellwert für den Amplitudenbegrenzer. Deshalb können auch die Schwingungen bei einem Frequenzsprung berücksichtigt werden. Die Verzögerung des Ausgangssignals des Amplitudenbegrenzers ist notwendig, damit es aufgrund der Gegenkopplung zu keiner Verminderung der Verstärkung des Amplitudenbegrenzers kommt.

Es sei an dieser Stelle erwähnt, daß aus der DE-B-26 31 335 und der DE-A-32 18 264 Schaltungsanordnungen bekannt sind, die ebenfalls das Problem der Signalinversion beheben. Beide Schaltungen sind jedoch sehr kompliziert aufgebaut.

Auch sei noch erwähnt, daß aus der US-A-41 42 208, Fig. 4, eine Demodulationsschaltung für Videosignale bekannt ist, die mit einem Tiefpaßfilter versehen ist. Es fehlt dieser Schaltung jedoch das Verzögerungsglied. Auch dadurch ist die bekannte Schaltung nicht imstande, die heutige Aufgabenstellung zu erfüllen.

In einem praktischen Schaltungsaufbau hat sich gezeigt, daß die Verzögerungszeit T des Verzögerungsgliedes so gewählt werden muß, daß gilt:

$$0,225/f_o < T < 0,275/f_u,$$

wobei $f_u$ die untere Grenzfrequenz und $f_o$ die obere Grenzfrequenz des Frequenzhubes der trägermodulierten Schwingung darstellt.

Eine Ausführungsform des Amplitudenbegrenzers ist dadurch gekennzeichnet, daß der Amplitudenbegrenzer einen Differenzverstärker umfaßt, dessen nichtinvertierender Eingang den ersten Eingang und dessen invertierender Eingang den zweiten Eingang des Amplitudenbegrenzers darstellt. Der Differenzverstärker begrenzt die Differenz zwischen dem frequenzmodulierten Bildsignal und dem Ausgangssignal des Tiefpasses.

Der Frequenzdemodulator kann so ausgebildet werden, daß dieser mit Hilfe des vorhandenen Verzögerungsgliedes und eines zusätzlichen Multiplizierers einen Laufzeitdemodulator bilden. Dazu ist vorgesehen, daß der Ausgang des Amplitudenbegrenzers und der Ausgang des Verzögerungsgliedes je mit einem Eingang eines Multiplizierers gekoppelt sind, der zum Liefern eines demodulierten Bildsignals eingerichtet ist.

Anhand der Zeichnungen wird im folgenden die Erfindung naher erläutert. Es zeigt:

Fig. 1 einen Teil einer Videorecorderschaltung mit einem Ausführungsbeispiel der erfindungsgemäßen Schaltungsanordnung und

Fig. 2 Diagramme zur Erläuterung des Ausführungsbeispiels nach Fig. 1.

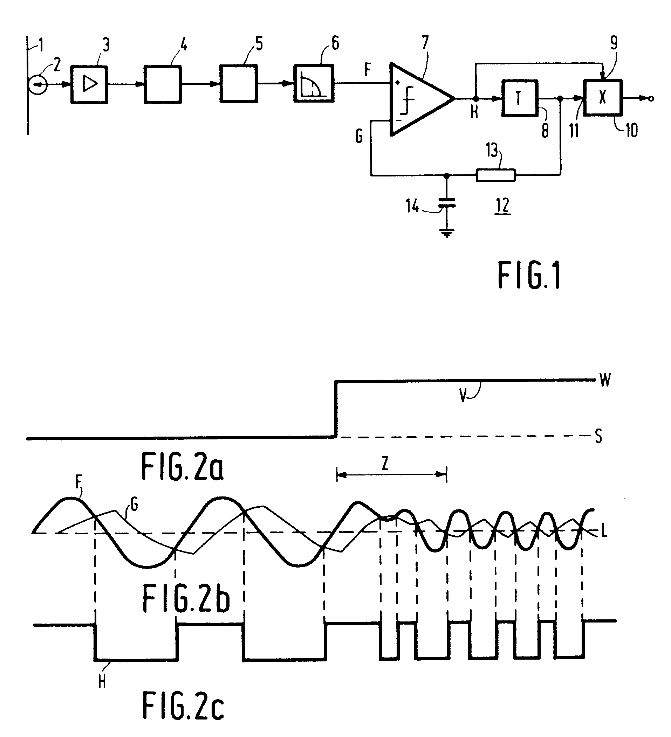

In Fig. 1 wird ein frequenzmoduliertes Helligkeitssignal, das auf einem Magnetband 1 aufgezeichnet ist, mit Hilfe eines Videokopfes 2 wiedergegeben. Die Trägerfrequenz des frequenzmodulierten Helligkeitssignales liegt bei ca. 4,3 MHz und der Hubbereich zwischen ca. 3,8 und 4,8 MHz. Das frequenzmodulierte Helligkeitssignal wird in einem Vorverstärker 3 verstärkt und dann einer Amplitudenregelschaltung 4 zugeführt, die die leichten Schwankungen der Amplitude des Signals ausgleicht, welche sich aus Abweichungen der Empfindlichkeit des Magnetbandes und des Magnetkopfes sowie durch Führungsfehler des Magnetkopfes ergeben. Das Ausgangssignal der Amplitudenregelschaltung 4 wird einem Ausfallkompensator 5 zugeleitet, der den Ausfall eines frequenzmodulierten Helligkeitssignales feststellt und das ausgefallene Signal durch ein Signal ersetzt, das in der vorhergehenden Zeile gespeichert worden ist und nun eingefügt wird. Der Ausgang des Ausfallkompensators 5 ist mit einem Tiefpaß 6 verbunden, der eine Grenzfrequenz von etwa 5 MHz aufweist. Der Tiefpaß 6 begrenzt die Signalbandbreite des frequenzmodulierten Helligkeitssignals auf ein erforderliches Mindestmaß und trägt somit zur Rauschverminderung bei.

Es sei angenommen, daß das Helligkeitssignal V vor der Frequenzmodulation und Aufzeichnung einen Verlauf hatte wie in Fig. 2a dargestellt. In dem dargestellten Signalauschnitt in Fig. 2a ändert das Helligkeitssignal V seinen Bildinhalt plötzlich von einem Schwarzpegel S auf einen Weißpegel W, d.h. die Frequenz des frequenzmodulierten Signals weist einen Frequenzsprung von einer niedrigen zu einer hohen Frequenz auf. Insbesondere durch den BandVideokoft-Übertragungsweg und die Filterung wird die Amplitude des frequenzmodulierten Signals bei einem solchen Frequenzsprung plötzlich sehr viel kleiner. Bei ungünstiger Phasenlage kann es nun dazu kommen, daß ein oder auch mehrere Schwingungszüge des frequenzmodulierten Helligkeitssignals einen anormalen Verlauf haben, wie das auch die Fig. 2b zeigt, und zwar während eines Zeitintervalls Z des frequenzmodulierten Helligkeitssignals F. Das Zeitintervall Z beginnt zu einem Zeitpunkt, wo sich das modulierte Helligkeitssignal von schwarz nach weiß ändert.

Wenn nun das frequenzmodulierte Helligkeitssignal F in einem Amplitudenbegrenzer verstärkt und dann begrenzt wird, ergibt sich eine Signalinversion, wie im folgenden gezeigt wird. Der Schwellwert L des Amplitudenbegrenzers, der in Fig. 2b eingezeichnet ist, weist eine konstante mittlere Eingangsspannung auf. Eine hohe Frequenz des frequenzmodulierten Helligkeitssignals F entspricht einem Weißpegel, während eine niedrige Frequenz einem Schwarzpegel entspricht. Wie man aus Fig. 2b erkennt, schneiden während des Zeitintervalles Z mehrere Schwingungszüge den Schwellwert L nicht. Die Frequenz des frequenzmodulierten Helligkeitssignales F ist in dem Zeitintervall Z dadurch herabgesetzt. In dem Bild, das in einem Fernsehempfänger nach der Demodulation wiedergegeben wird, erscheint also kein weißer sondern ein schwarzer Bildinhalt, d.h. es tritt eine Inversionserscheinung auf.

Eine solche Signalinversion wird durch das folgende zu beschreibende Ausführungsbeispiel der erfindungsgemäßen Schaltungsanordnung vermieden. Das Ausgangssignal des Tiefpasses 6 wird einem nichtinvertierenden Eingang eines Amplitudenbegrenzers 7 zugeführt. Der Amplitudenbegrenzer 7 enthält einen Differenzverstärker, der ein Differenzsignal, zusammengesetzt aus der Differenz zwischen dem Ausgangssignal des Tiefpasses 6 und dem Ausgangssignal eines Tiefpasses 12 erhält. Wegen der nichtlinearen Schaltungseigenschaften des Differenzverstärkers tritt eine Begrenzwirkung auf. Der Ausgang des Amplitudenbegrenzers 7 ist einerseits mit einem Verzögerungsglied 8 verbunden und andererseits mit einem ersten Eingang 9 eines Multiplizierers 10. Das Ausgangssignal des Verzögerungsgliedes 8 wird einem zweiten Eingang 11 des Multiplizierers 10 zugeleitet und ebenfalls dem Tiefpaß 12, der einen Widerstand 13 und eine Kapazität 14 enthält. Das Verzögerungsglied und der Multiplizierer 10 bilden einen als Laufzeitdemodulator bezeichneten Frequenzdemodulator. Der eine Anschlußpunkt des Widerstandes 13 ist an den Ausgang des Verzögerungsgliedes 8 und der andere Anschlußpunkt an den invertierenden Eingang des Amplitudenbegrenzers 7 und an die mit einem Bezugspotential verbundene Kapazität 14 angeschlossen.

Die Verzögerungszeit T des Verzögerungsgliedes 8 sollte gleich einem Viertel der Trägerperiode des frequenzmodulierten Helligkeitssignals sein. In einem praktischen Schaltungsaufbau hat sich gezeigt, daß die Verzögerungszeit T so gewählt werden muß, daß gilt:

$$0{,}225/f_o < T < 0{,}275/f_u,$$

wobei $f_u$ die untere Grenzfrequenz von 3,8 MHz und $f_o$ die obere Grenzfrequenz von 4,8 MHz des Frequenzhubes der trägermodulierten Schwingung ist. Die Grenzfrequenz des Tiefpasses 12 liegt bei ungefähr 3 MHz. Bei der Wahl der Grenzfrequenz des Tiefpasses 12 ist darauf zu achten, daß das Ausgangssignal des Tiefpasses 12 den Schwankungen des zeitlichen Mittelwertes des Ausgangssignales des Verzögerungsgliedes 8 schnell genug folgen kann.

Der Tiefpaß 12 gibt ein Ausgangssignal G ab, das in Fig. 2b dargestellt ist. Schneiden sich die Signale F und G, ändert das Ausgangssignal des Amplitudenbegrenzers 7 seine Polarität. Das Signal G ist also der Schwellwert des Amplitudenbegrenzers 7. Der Schwellwert des Amplitudenbegrenzers wird, nachdem sich die Signale F und G geschnitten haben, in Richtung auf den aktuellen Signalwert nachgeregelt.

Das Ausgangssignal H des Amplitudenbegrenzers 7 ist in Fig. 2c dargestellt. Die Dauer eines solchen Rechtecksignales im Signal H kennzeichnet die Frequenz des frequenzmodulierten Signales. Je länger ein solches Rechtecksignal andauert, um so niedriger ist die Frequenz des frequenzmodulierten Signales. Da die Dauer der Rechtecksignale im Zeitintervall Z sehr viel kürzer als die übrige Rechtecksignale ist, wird der Frequenzsprung von einer niedrigen auf eine höhere Frequenz auch demoduliert. Es kann also keine Inversionserscheinung auftreten.

**Patentansprüche**

1. Schaltungsanordnung für ein Bildwiedergabegerät mit einem Amplitudenbegrenzer (7), der einen Eingang und einen Ausgang aufweist und der zum Umschalten der Polarität seines Ausgangssignals eingerichtet ist, wenn ein frequenzmoduliertes Bildsignal an seinem Eingang einen Schwellwert passiert, mit einem mit dem Ausgang des Amplitudenbegrenzers (7) gekoppelten Frequenzdemodulator (8, 10) und mit einem Verzögerungsglied, dessen Verzögerungszeit T in der Größenordnung von einem Viertel der Trägerperiode des frequenzmodulierten Bildsignals liegt, dadurch gekennzeichnet, daß der Ausgang des Amplitudenbegrenzers (7) über das Verzögerungsglied (8) mit dem Eingang eines Tiefpasses (12) gekoppelt ist, dessen Ausgang mit einem zweiten Eingang des Amplitudenbegrenzers gekoppelt ist und der den Schwellwert des Amplitudenbegrenzers (7) liefert.

2. Schaltungsanordnung nach Anspruch 1, dadurch gekennzeichnet, daß für die Verzögerungszeit T des Verzögerungsgliedes (8) gilt:

$$0{,}225/f_o < T < 0{,}275/f_u,$$

wobei $f_u$ die untere Grenzfrequenz und $f_o$ die obere Grenzfrequenz des Frequenzhubes der trägermodulierten Schwingung darstellt.

3. Schaltungsanordnung nach einem der vorhergehenden Ansprüche, dadurch gekennzeichnet, daß der Amplitudenbegrenzer (7) einen Differenzverstärker umfaßt, dessen nichtinvertierender Eingang den ersten Eingang und dessen invertierender Eingang den zweiten Eingang des Amplitudenbegrenzers darstellt.

4. Schaltungsanordnung nach einem der vorhergehenden Ansprüche, dadurch gekennzeichnet, daß der Ausgang des Amplitudenbegrenzers (7) und der Ausgang des Verzögerungsgliedes (8) je mit einem Eingang eines Multiplizierers (10) gekoppelt sind, der zum Liefern eines demodulierten Bildsignals eingerichtet ist.

**Claims**

1. Circuit arrangement for a picture reproducing apparatus comprising an amplitude limiter having an input and an output, which amplitude limiter (7) is constructed to change the polarity of its output signal when a frequency-modulated picture signal on its input exceeds a threshold value, a frequency demodulator (8, 10) coupled to the output of the amplitude limiter (7), and a delay means whose delay T is of the order of magnitude of a quarter of the carrier period of the frequency-modulated picture signal, characterized in that the output of the amplitude limiter (7) is coupled to the input of a low-pass filter (12) *via* the delay means (8), the output of said low-pass filter being coupled to a second input of the amplitude limiter to produce the threshold value of the amplitude limiter (7).

2. Circuit arrangement as claimed in Claim 1, characterized in that the delay T of the delay means (8) complies with:

$0.225/f_o < T < 0.275/f_u,$

where $f_u$ is the lower limit frequency and $f_o$ is the upper limit frequency of the frequency swing of the carriermodulated wave.

3. Circuit arrangement as claimed in one of the preceding Claims, characterized in that the amplitude limiter (7) comprises a differential amplifier whose non-inverting input constitutes the first input and whose inverting input constitutes the second input of the amplitude limiter.

4. Circuit arrangement as claimed in one of the preceding Claims, characterized in that the output of the amplitude limiter (7) and the output of the delay means (8) are coupled each to an input of a multiplier (10), which multiplier is constructed to supply a demodulated picture signal.

## Revendications

1. Montage de circuit pour appareil de reproduction d'image comportant un limiteur d'amplitude (7), qui présente une entrée et une sortie et qui est agencé pour changer la polarité de son signal de sortie lorsqu'un signal image à modulation de fréquence dépasse à son entrée une valeur de seuil, un démodulateur de fréquence (8, 10) couplé à la sortie du limiteur d'amplitude (7) et un élément à retard dont le temps de retard T est de l'ordre d'un quart de la période porteuse du signal image à modulation de fréquence, caractérisé en ce que la sortie du limiteur d'amplitude (7) est couplée, via l'élément à retard (8), à l'entrée d'un filtre passebas (12) dont la sortie est couplée à une seconde entrée du limiteur d'amplitude et qui délivre la valeur de seuil du limiteur d'amplitude (7).

2. Montage de circuit selon la revendication 1, caractérisé en ce que le temps de retard T de l'élément à retard (8) répond à la condition suivante :

$0,225/f_o < T < 0,275/f_u$

où $f_u$ est la fréquence limite inférieure et $f_o$ la fréquence limite supérieure de la plage de fréquences de l'oscillation à modulation de porteuse.

3. Montage de circuit selon l'une quelconque des revendications précédentes, caractérisé en ce que le limiteur d'amplitude (7) comprend un amplificateur différenciateur dont l'entrée non inverseuse représente la première entrée et dont l'entrée inverseuse représente la seconde entrée du limiteur d'amplitude.

4. Montage de circuit selon l'une quelconque des revendications précédentes, caractérisé en ce que la sortie du limiteur d'amplitude (7) et la sortie de l'élément à retard (8) sont couplées respectivement à une entrée d'un multiplicateur (10) qui est prévu pour délivrer un signal image démodulé.

EP 0 245 886 B1

FIG.1

FIG.2a

FIG.2b

FIG.2c